# EUROPEAN PATENT APPLICATION

(11) **EP 4 491 043 A1**
(43) Date of publication of application: **15.01.2025**
(21) Application number: 23799113.8
(22) Date of filing: 01.03.2023
(51) Int. Cl.: A24F 40/40

(54) **POROUS BIOLOGICAL CERAMIC-MODIFIED HEATING STRUCTURE, AND PREPARATION METHOD THEREFOR AND APPLICATION THEREOF**

(30) Priority: 06.05.2022 CN 202210488051
(71) Applicant: Shenzhen Smoore Technology Limited, Shenzhen, Guangdong 518102 (CN)
(72) Inventor: WANG, Yaqiao, Shenzhen, Guangdong 518102 (CN); TANG, Guangwu, Shenzhen, Guangdong 518102 (CN)
(74) Representative: Westphal, Mussgnug & Partner, Patentanwälte mbB
(86) International application number: PCT/CN2023/079043
(87) International publication number: WO 2023/213124

(57) **Abstract**

A porous bioceramic-modified heating structure and a preparation method and an application thereof. The heating structure includes a substrate and a porous bioceramic layer located on a surface of the substrate, the porous bioceramic layer includes micro-nano protrusions, and the base material of the porous bioceramic layer is calcium phosphate salt. By arranging the porous bioceramic layer including the micro-nano protrusions on the substrate of the heating structure, the specific surface area of the heating structure is increased, thereby reducing the bubble size and increasing the detachment frequency in an vaporization process, so as to improve the vaporization efficiency and reduce the temperature of the substrate of the heating structure in the vaporization process; and additionally, the micro-nano protrusion structure isolates the contact between the substrate of the heating structure and vaporization liquid, thereby reducing the risk of heavy metals from the substrate precipitating into the vaporization liquid, meanwhile, the base material of the porous bioceramic layer is the calcium phosphate salt, which does not contain the heavy metals, and there is no risk of the heavy metals precipitating into the vaporization liquid.

## Description

### CROSS-REFERENCE TO RELATED APPLICATIONS

This application claims priority to Chinese Patent Application No. 202210488051.8, entitled "POROUS BIOCERAMIC-MODIFIED HEATING STRUCTURE AND PREPARATION METHOD AND APPLICATION THEREOF", filed with the China National Intellectual Property Administration on May 6, 2022, which is incorporated herein by reference in its entirety.

### TECHNICAL FIELD

This application belongs to the technical field of heating materials, and in particular to a porous bioceramic-modified heating structure and a preparation method and an application thereof.

### BACKGROUND

An electronic vaporization process is a heat transfer process accompanied by boiling. A heating structure commonly used in the field of electronic vaporization includes a heating wire, a heating mesh, etc. However, the surfaces of the heating wire and the heating mesh are smooth surfaces. To enhance boiling heat transfer, increasing the specific surface area of the heating structure is an important method to increase the heat transfer coefficient, reduce the temperature, and improve energy utilization.

With the development of nanotechnology, many researchers have found that processing a micro structure or a nano structure on the surface of an ordinary heating structure can improve the boiling heat transfer performance of a heat transfer surface. This is because after the heat transfer surface is modified through the micro-nano structure, the specific surface area is greatly increased, exhibiting better heat transfer performance than the smooth surfaces. In particular, the use of the micro-nano structure can increase the number of gasification cores in a boiling process, increase the frequency of bubble detachment, etc., thereby strengthening the boiling process. Therefore, if a micro-nano porous structure can be applied to the field of electronic vaporization, the effects of enhancing the vaporization process, reducing the vaporization temperature, and improving the vaporization efficiency can also be achieved.

The micro-nano porous structure commonly used in the prior art is a porous metal structure, including porous copper, porous silver, porous nickel, etc. However, these metals are heavy metals, and in the vaporization process, these metal elements will enter vaporization liquid, which does not meet safety requirements for use in the field of electronic vaporization. Additionally, the mismatch between expansion coefficients of the porous metals and a substrate of the heating structure can easily lead to the problem of thermal failure.

### SUMMARY

Therefore, the technical problem to be solved by this application is to overcome the defects that in the prior art, a heating structure is smooth in surface and low in heat transfer efficiency, and the temperature of a heating wire and a heating mesh in a vaporization process is high; and a commonly used porous structure contains heavy metals that can easily precipitate into vaporization liquid, failing to meet safety requirements for use and prone to thermal failures and the like. Therefore, a porous bioceramic-modified heating structure and a preparation method and an application thereof are provided.

Therefore, this application provides the following technical solutions.

This application provides a porous bioceramic-modified heating structure, including a substrate and a porous bioceramic layer located on a surface of the substrate.

The porous bioceramic layer includes micro-nano protrusions, and a base material of the porous bioceramic layer is calcium phosphate salt.

Optionally, a thickness of the porous bioceramic layer ranges from 10 µm to 500 µm. Optionally, a size of the micro-nano protrusions ranges from 10 nm to 100 µm.

Optionally, the micro-nano protrusions are at least in one of an acicular shape, a granular shape, a grass ball shape, and a sheet shape.

Optionally, the heating structure satisfies one or any combination of the following three conditions:
(1) the heating structure is a heating mesh, a heating wire, or a heating film;
(2) the calcium phosphate salt is at least one of hydroxyapatite, β-tricalcium phosphate, and biphasic calcium phosphate; and
(3) the material of the substrate is an iron-chromium-aluminum alloy, a nickel-chromium alloy, stainless steel, titanium metal, or nickel metal.

This application further provides a preparation method of the above porous bioceramic-modified heating structure, including the following steps: using an electrodeposition method to prepare the porous bioceramic layer on the surface of the substrate.

Optionally, the electrodeposition method includes: conducting an electrodeposition reaction in an aqueous solution containing calcium ions and phosphate ions under acidic conditions, and subsequent hydrothermal treatment.

Optionally, a concentration of the calcium ions in the aqueous solution ranges from 0.005 mol/L to 0.1 mol/L, and a concentration of the phosphate ions ranges from 0.005 mol/L to 0.1 mol/L;
optionally, a pH of the aqueous solution is 4 to 6;
optionally, a current density for the electrodeposition reaction ranges from 0.001 mA/cm² to 1 mA/cm²; and
a time and a temperature for the electrodeposition reaction are conventional operating parameters in the art.

Optionally, the temperature for the hydrothermal treatment ranges from 50°C to 80°C, and the time for the hydrothermal treatment ranges from 24 h to 48 h; optionally, the hydrothermal treatment is conducted under alkaline conditions;
optionally, a calcination step is further included after the hydrothermal treatment; and
optionally, a calcination temperature ranges from 600°C to 1200°C, a calcination time ranges from 2 h to 4 h, and a calcination atmosphere is a nitrogen atmosphere, an inert atmosphere, or a reducing atmosphere.

This application further provides an application of the above porous bioceramic-modified heating structure or the porous bioceramic-modified heating structure prepared by the above preparation method in a heating element, a vaporizer, or an electronic vaporization device.

Optionally, the electronic vaporization device is an e-cigarette.

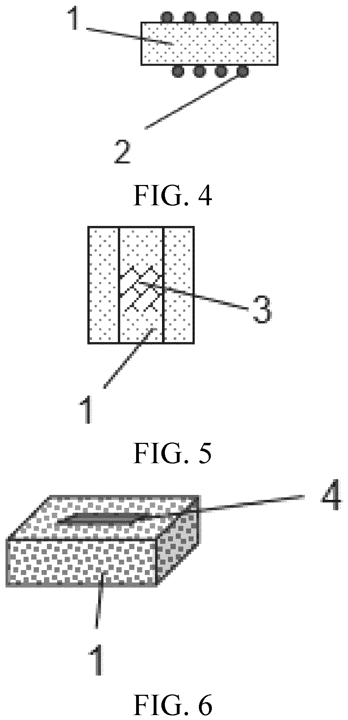

As shown in FIG. 4 to FIG. 6, the heating element includes a liquid guiding substrate 1 and a heating structure. The heating structure is arranged on the surface of the liquid guiding substrate and is configured to heat and vaporize liquid to form aerosol.

The heating structure may be a heating wire 2, a heating mesh 3, or a heating film 4.

The liquid guiding substrate transports the liquid through capillary action force, and may be a porous material such as cotton, porous ceramic, and porous glass.

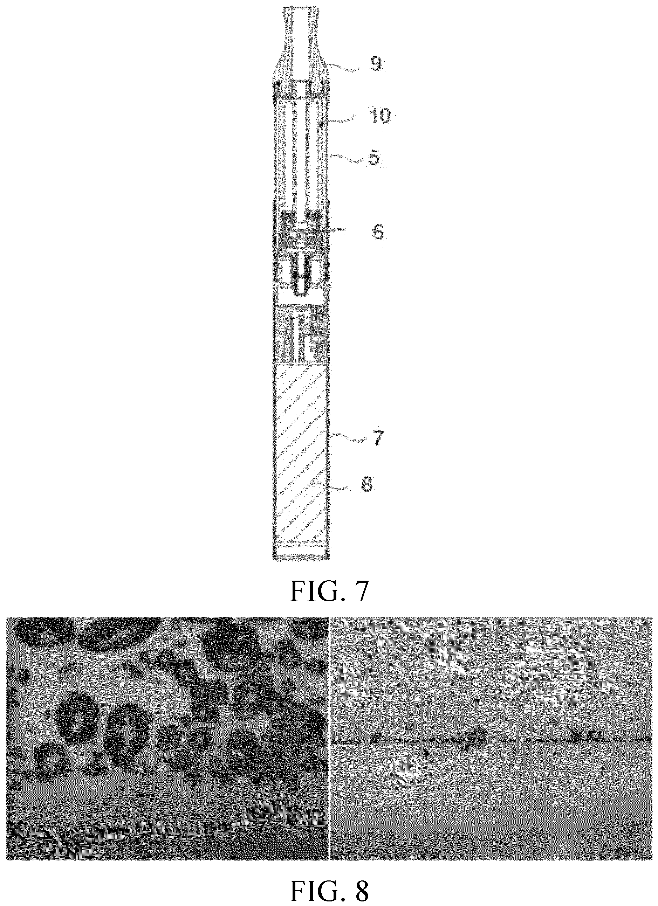

As shown in FIG. 7, the e-cigarette includes a mouthpiece 9, a vaporizer 5, and a main body 7. The vaporizer 5 includes a liquid storage tank 10 and a heating structure 6.

The main body is provided with a power supply 8 that provides power to the heating structure 6. The technical solutions of this application have the following advantages:
the porous bioceramic-modified heating structure provided by this application includes the substrate and the porous bioceramic layer located on the surface of the substrate, where the porous bioceramic layer includes the micro-nano protrusions, and the base material of the porous bioceramic layer is the calcium phosphate salt. By arranging the porous bioceramic layer including the micro-nano protrusions on the substrate of the heating structure in this application, the specific surface area of the heating structure is increased, thereby reducing the bubble size and increasing the detachment frequency in the vaporization process, so as to improve the vaporization efficiency and also reduce the temperature of the substrate of the heating structure in the vaporization process; and additionally, the micro-nano protrusion structure isolates the contact between the substrate of the heating structure and the vaporization liquid, thereby reducing the risk of the heavy metals from the substrate precipitating into the vaporization liquid, meanwhile, the base material of the porous bioceramic layer is the calcium phosphate salt, which does not contain the heavy metals, there is no risk of the heavy metals precipitating into the vaporization liquid, the expansion coefficient matches the substrate, and therefore the problem of the thermal failure is not likely to happen.

According to the porous bioceramic-modified heating structure provided by this application, by limiting the thickness of the porous bioceramic layer and the size and the shape of the micro-nano protrusions, the specific surface area of the heating structure can be further increased, and the vaporization efficiency of the heating structure is improved.

According to the preparation method of the porous bioceramic-modified heating structure provided by this application, the generation of the calcium phosphate salt is accompanied by nanoscale and microscale hydrogen bubbles in the electrodeposition preparation process. These hydrogen bubbles are natural pore-forming agents, creating specific bubble detachment channels. When the porous bioceramic is applied to the vaporization field, these bubble detachment channels become natural detachment channels for gaseous vaporization media, thereby preparing a heating structure with a high specific surface area and vaporization efficiency.

### BRIEF DESCRIPTION OF THE DRAWINGS

In order to describe technical solutions in specific implementations of this application or in the prior art more clearly, accompanying drawings required to be used in the descriptions of the specific implementations or the prior art will be simply introduced below. It is apparent that the accompanying drawings described below are some implementations of this application, and those of ordinary skill in the art can obtain other accompanying drawings according to these accompanying drawings without creative work.
FIG. 1 is an electron microscope image of the surface of a porous bioceramic-modified heating structure according to Embodiment 1 of this application;
FIG. 2 is an electron microscope image of the surface of a porous bioceramic-modified heating structure according to Embodiment 2 of this application;
FIG. 3 is an electron microscope image of the surface of a porous bioceramic-modified heating structure according to Embodiment 3 of this application;
FIG. 4 is a schematic structural diagram of a heating element according to this application;
FIG. 5 is a schematic structural diagram of another heating element according to this application;
FIG. 6 is a schematic structural diagram of still another heating element according to this application;
FIG. 7 is a schematic structural diagram of an e-cigarette according to this application; and
FIG. 8 illustrates bubble diagrams of a pool boiling experiment before (left figure) and after (right figure) modifying the heating wire in Embodiment 1 of this application.

In the drawings, 1, liquid guiding substrate; 2, heating wire; 3, heating mesh; 4, heating film; 5, vaporizer; 6, heating structure; 7, main body; 8, power supply; 9, mouthpiece; and 10, liquid storage tank.

### DETAILED DESCRIPTION

The following embodiments are provided to better facilitate a further understanding of this application, are not limited to the described optimal implementations, and do not constitute limitations on the content and scope of protection of the present disclosure. Any product derived by any person from the inspiration of the present disclosure or by combining the features of this application with other prior art, which is the same or similar to this application, falls within the scope of protection of this application.

Embodiments in which specific experimental steps or conditions are not indicated are implemented according to the operations of conventional experimental steps or conditions described in the literatures in the art. Reagents or instruments used without indicating a manufacturer are conventional reagent products that are commercially available.

### EMBODIMENT 1

A porous bioceramic-modified heating structure includes a substrate and a porous bioceramic layer located on a surface of the substrate. The material of the substrate is an iron-chromium-aluminum heating wire, the base material of the porous bioceramic layer is hydroxyapatite, and the heating structure is a heating wire.

A preparation method of the porous bioceramic-modified heating structure includes:
preparing a mixed solution of 0.01 mol/L CaCh and 0.01 mol/L Na₂HPO₄, adjusting the pH to 6 with ammonia water, and conducting an electrodeposition reaction at 90°C for 40 min. In the reaction process, the heating wire is used as a cathode, and an insoluble anode (pure titanium sheet) is used. Calcium phosphate salt is generated on the heating wire (i.e., the cathode). The current density for the reaction is 0.4 mA/cm². Hydrogen gas is also generated in the process of generating the calcium phosphate salt. The generation and detachment of the hydrogen gas create natural pores between protrusions of the calcium phosphate salt.

The heating wire modified by the calcium phosphate salt is placed into a 0.1 mol/L sodium hydroxide solution at 60°C for 36 h to completely convert the obtained precursor calcium phosphate salt into hydroxyapatite (HAP).

To enhance the strength of bioceramic, the bioceramic is sintered in a nitrogen atmosphere at 1200°C for 3 h to obtain the porous bioceramic-modified heating structure.

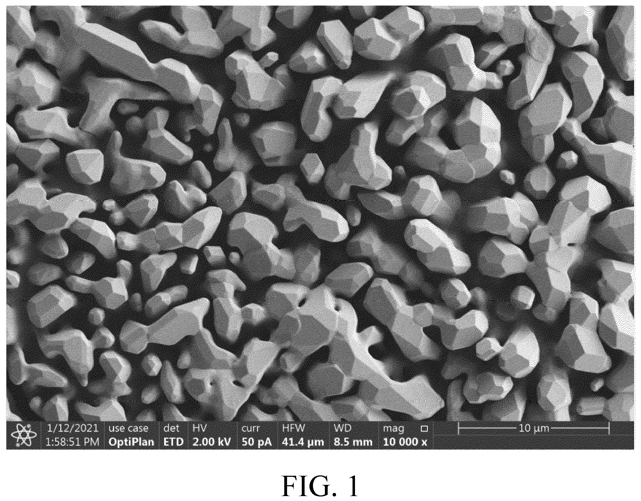

FIG. 1 is an electron microscope image of the surface of the modified heating structure. As can be seen from the figure, the protrusions are in a strip shape with the thickness of about 20 µm, and the size of the protrusions ranges from 2 µm to 10 µm.

### EMBODIMENT 2

A porous bioceramic-modified heating structure includes a substrate and a porous bioceramic layer located on a surface of the substrate. The material of the substrate is an iron-chromium-aluminum metal heating wire, the base material of the porous bioceramic layer is hydroxyapatite, and the heating structure is a heating wire.

A preparation method of the porous bioceramic-modified heating structure includes:
preparing a mixed solution of 0.005 mol/L CaCh and 0.005 mol/L Na₂HPO₄, adjusting the pH to 6 with ammonia water, and conducting an electrodeposition reaction at 90°C for 40 min. In the reaction process, the heating wire is used as a cathode, and an insoluble anode (pure titanium sheet) is used. Calcium phosphate salt is generated on the heating wire (i.e., the cathode). The current density for the reaction is 0.6 mA/cm². Hydrogen gas is also generated in the process of generating the calcium phosphate salt. The generation and detachment of the hydrogen gas create natural pores between protrusions of the calcium phosphate salt.

The heating wire modified by the calcium phosphate salt is placed into a 0.1 mol/L sodium hydroxide solution at 60°C for 48 h to completely convert the obtained precursor calcium phosphate salt into hydroxyapatite (HAP).

To enhance the strength of bioceramic, the bioceramic is sintered in a nitrogen atmosphere at 1200°C for 3 h to obtain the porous bioceramic-modified heating structure.

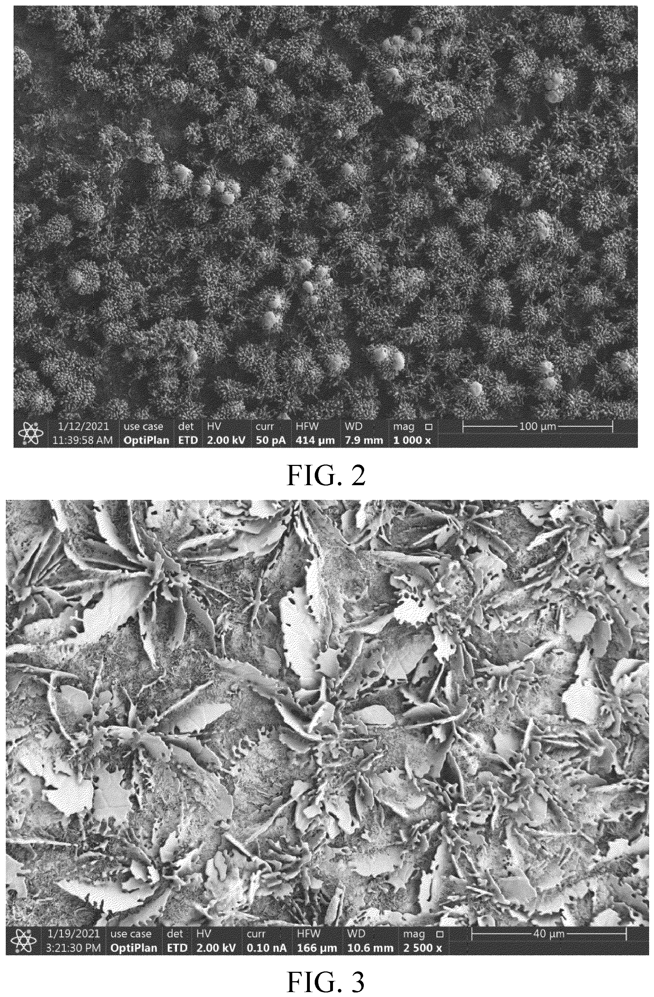

FIG. 2 is an electron microscope image of the surface of the modified heating structure. As can be seen from the figure, the protrusions are in a grass ball shape with the thickness of about 20 µm, the diameter of a single ball is about 20 µm, and the grass ball is composed of branches with the diameter of about 2 µm to 5 µm.

### EMBODIMENT 3

A porous bioceramic-modified heating structure includes a substrate and a porous bioceramic layer located on a surface of the substrate. The material of the substrate is an iron-chromium-aluminum metal heating mesh, the base material of the porous bioceramic layer is hydroxyapatite, and the heating structure is a heating wire.

A preparation method of the porous bioceramic-modified heating structure includes:
preparing a mixed solution of 0.005 mol/L CaCl₂ and 0.005 mol/L Na₂HPO₄, adjusting the pH to 6 with ammonia water, and conducting an electrodeposition reaction at 90°C for 40 min. In the reaction process, the heating wire is used as a cathode, and an insoluble anode (pure titanium sheet) is used. Calcium phosphate salt is generated on the iron-chromium-aluminum metal heating mesh (i.e., the cathode). The current density for the reaction is 0.7 mA/cm². Hydrogen gas is also generated in the process of generating the calcium phosphate salt. The generation and detachment of the hydrogen gas create natural pores between protrusions of the calcium phosphate salt.

The heating wire modified by the calcium phosphate salt is placed into a 0.1 mol/L sodium hydroxide solution at 60°C for 24 h to completely convert the obtained precursor calcium phosphate salt into hydroxyapatite (HAP).

To enhance the strength of bioceramic, the bioceramic is sintered in an air atmosphere at 1200°C for 3 h to obtain the porous bioceramic-modified heating structure.

FIG. 3 is an electron microscope image of the surface of the modified heating structure. As can be seen from the figure, the protrusions are in a petal shape with the thickness of about 10 µm, and the length of each petal is about 10 µm.

### EXPERIMENTAL EXAMPLE

### Boiling experiment

Under the saturated atmospheric pressure, a pool boiling experiment is conducted with a mixture of propylene glycol (PG)/vegetable glycerin (VG) = 3:7 as working fluid. During the experiment, the temperature of the working fluid is maintained at 210°C. FIG. 8 illustrates bubble diagrams in the process of boiling in Embodiment 1 before (left figure) and after (right figure) modification of the heating wire at the same power. It may be apparently seen from the figures that after modification with micro-nano porous hydroxyapatite, the number of generated bubbles is increased and the diameter is significantly reduced, and the frequency of bubble detachment is improved. Under the condition of the same power of 12 W, film boiling occurs on the surface of the unmodified heating wire, causing the heating wire to turn red; while the modified heating wire is in a nucleate boiling stage, and the heating wire has a low temperature. That is, after bio-modification with the porous bioceramic, the vaporization efficiency of the heating wire in the electronic vaporization process can be improved, and meanwhile the temperature of the substrate of the heating structure in the vaporization process is reduced. Other embodiments have similar technical effects and are not shown individually.

Apparently, the above embodiments are merely examples for clear descriptions, but do not limit the implementations. Those of ordinary skill in the art can make other different forms of changes or variations based on the above descriptions. It is neither necessary nor possible to exhaust all implementations. Obvious changes or variations expanded therefrom still fall within the scope of protection of the present disclosure.

## Claims

1. A porous bioceramic-modified heating structure, comprising:
a substrate; and
a porous bioceramic layer located on a surface of the substrate,
wherein the porous bioceramic layer comprises micro-nano protrusions, and
wherein a base material of the porous bioceramic layer is calcium phosphate salt.

2. The porous bioceramic-modified heating structure of claim 1, wherein a thickness of the porous bioceramic layer ranges from 10 µm to 500 µm.

3. The porous bioceramic-modified heating structure of claim 1 or 2, wherein a size of the micro-nano protrusions ranges from 10 nm to 100 µm.

4. The porous bioceramic-modified heating structure of any one of claims 1 to 3, wherein the micro-nano protrusions are at least in one of an acicular shape, a granular shape, a grass ball shape, and a sheet shape.

5. The porous bioceramic-modified heating structure of any one of claims 1 to 3, wherein the heating structure satisfies one or any combination of the following three conditions:
(1) the heating structure is a heating mesh, a heating wire, or a heating film;
(2) the calcium phosphate salt is at least one of hydroxyapatite, β-tricalcium phosphate, and biphasic calcium phosphate; and
(3) a material of the substrate is an iron-chromium-aluminum alloy, a nickel-chromium alloy, stainless steel, titanium metal, or nickel metal.

6. A preparation method of the porous bioceramic-modified heating structure of any one of claims 1 to 5, comprising the following steps: using an electrodeposition method to prepare the porous bioceramic layer on the surface of the substrate.

7. The preparation method of the porous bioceramic-modified heating structure of claim 6, wherein the electrodeposition method comprises:
conducting an electrodeposition reaction in an aqueous solution containing calcium ions and phosphate ions under acidic conditions, and
subsequent hydrothermal treatment.

8. The preparation method of the porous bioceramic-modified heating structure of claim 7, wherein a concentration of the calcium ions in the aqueous solution ranges from 0.005 mol/L to 0.1 mol/L, and
wherein a concentration of the phosphate ions ranges from 0.005 mol/L to 0.1 mol/L.

9. The preparation method of the porous bioceramic-modified heating structure of claim 7, wherein a pH of the aqueous solution is 4 to 6.

10. The preparation method of the porous bioceramic-modified heating structure of claim 7, wherein a current density for the electrodeposition reaction ranges from 0.001 mA/cm² to 1 mA/cm².

11. The preparation method of the porous bioceramic-modified heating structure of claim 7, wherein a temperature for the hydrothermal treatment ranges from 50°C to 80°C, and
wherein a time for the hydrothermal treatment ranges from 24 h to 48 h.

12. The preparation method of the porous bioceramic-modified heating structure of claim 7, wherein the hydrothermal treatment is conducted under alkaline conditions.

13. The preparation method of the porous bioceramic-modified heating structure of claim 7, further comprising:
a calcination step after the hydrothermal treatment.

14. The preparation method of the porous bioceramic-modified heating structure of claim 13, wherein a calcination temperature ranges from 600°C to 1200°C,
wherein a calcination time ranges from 2 h to 4 h, and
wherein a calcination atmosphere is a nitrogen atmosphere, an inert atmosphere, or a reducing atmosphere.

15. An application of the porous bioceramic-modified heating structure of any one of claims 1 to 5 or the porous bioceramic-modified heating structure prepared by the preparation method of any one of claims 6 to 14 in a heating element, a vaporizer, or an electronic vaporization device.
